# EUROPÄISCHE PATENTSCHRIFT

(11) **EP 1 452 044 B1**
(45) Veröffentlichungstag und Bekanntmachung des Hinweises auf die Patenterteilung: **05.09.2007**
(21) Anmeldenummer: 02792868.8
(22) Anmeldetag: 03.12.2002
(51) Int. Cl.: H04Q 3/00, H04L 29/06

(54) **VERFAHREN ZUM ÜBERMITTELN VON SIGNALISIERUNGSNACHRICHTEN, ZUGEHÖRIGE VORRICHTUNG, ZUGEHÖRIGE SIGNALISIERUNGSNACHRICHT UND ZUGEHÖRIGES PROGRAMM**
METHOD FOR TRANSMITTING SIGNALLING MESSAGES, CORRESPONDING DEVICE, CORRESPONDING SIGNALLING MESSAGE AND PROGRAM
PROCEDE DE TRANSMISSION DE MESSAGES DE SIGNALISATION, DISPOSITIF ASSOCIE, MESSAGE DE SIGNALISATION ASSOCIE ET PROGRAMME ASSOCIE

(30) Priorität: 10.12.2001 EP 01129453
(43) Veröffentlichungstag der Anmeldung: 01.09.2004
(73) Patentinhaber: SIEMENS AKTIENGESELLSCHAFT, 80333 München (DE)
(72) Erfinder: LÜKEN, Joachim, 80686 München (DE)
(86) Internationale Anmeldenummer: PCT/EP2002/013671
(87) Internationale Veröffentlichungsnummer: WO 2003/051065

(56) Entgegenhaltungen:
- EP-A- 1 089 517
- WO-A-01/10140
- GB-A- 2 352 361
- SALMAN M A ET AL: "THE FUTURE OF IP-PSTN INTERWORKING" 38TH EUROPEAN TELECOMUNICATIONS CONGRESS. PROCEEDINGS NETWORKING THE FUTURE. UTRECHT, NL, AUG. 24 - 28, 1999, LONDON: IBTE, GB, 24. August 1999 (1999-08-24), Seiten 163-167, XP000847190
- HUITEMA C ET AL: "AN ARCHITECTURE FOR RESIDENTIAL INTERNET TELEPHONY SERVICE" IEEE NETWORK, IEEE INC. NEW YORK, US, Bd. 13, Nr. 3, Mai 1999 (1999-05), Seiten 50-56, XP000870631 ISSN: 0890-8044

## Beschreibung

Die Erfindung betrifft ein Verfahren, bei dem Nutzdaten zwischen einem durchschaltevermittelten Datenübertragungsnetz und einem Datenpaketübertragungsnetz übertragen werden. Es wird eine für ein durchschaltevermitteltes Datenübertragungsnetz festgelegte Ursprungs-Signalisierungsnachricht empfangen, welche Signalisierungsdaten für die Datenübertragung enthält. Zu der empfangenen Ursprungs-Signalisierungsnachricht wird eine für eine Datenpaketübertragung festgelegte Partner-Signalisierungsnachricht erzeugt und gesendet, die zum Transport der Ursprungs-Signalisierungsnachricht geeignet ist.

Ein solches Verfahren ist beispielsweise aus dem Entwurf der IETF (Internet Engineering Task Force) "SIP for Telephones (SIP-T) : Context and Architectures" bekannt. Dieser Entwurf ist unter der Internetadresse http://www.ietf.org/internet-draft der Öffentlichkeit zugänglich. Gemäß diesem Entwurf soll die Ursprungs-Signalisierungsnachricht in einer sogenannten eingekapselten Form in die Partner-Signalisierungsnachricht übernommen werden. Dadurch soll eine transparente Weitergabe der Signalisierungsdaten ermöglicht werden, d.h. eine Weitergabe ohne Veränderung der ursprünglichen Datenstruktur der Ursprungs-Signalisierungsnachricht bzw. eine Weitergabe, die ohne Kenntnis der Bedeutung der einzelnen Datenfelder der Ursprungs-Signalisierungsnachricht möglich ist.

Gemäß SIP-T, Abschnitt 3.2.3, "proxy", soll eine Signalisierungseinheit, welche die Partner-Signalisierungsnachricht empfängt und die gekapselten Signalisierungsdaten des durchschaltevermittelten Datenübertragungsnetzes nicht bearbeiten kann, diese Signalisierungsdaten ignorieren.

Ein anderes Beispiel ist aus dem Dokument GB 2352361 bekannt.

Es ist Aufgabe der Erfindung, zum Übermitteln von Signalisierungsdaten ein einfaches Verfahren anzugeben, das insbesondere einen Missbrauch der Signalisierungsdaten ausschließt. Außerdem sollen zugehörige Vorrichtungen, eine zugehörige Signalisierungsnachricht und ein zugehöriges Programm angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass gemäß SIP-T die Partner-Signalisierungsnachricht von einer Netzübergangseinheit bzw. einer Steuereinheit für eine Netzübergangseinheit ausgeht und das in der die Partner-Signalisierungsnachricht sendenden Netzübergangseinheit jedoch nicht immer bekannt ist, ob das Ziel der Signalisierung wieder eine Netzübergangseinheit oder ein IP-Teilnehmer (Internetprotocol) ist, d.h. ein Teilnehmer, der ein Endgerät am Internet betreibt. Weiterhin geht die Erfindung von der Überlegung aus, dass die Ursprungs-Signalisierungsnachricht Signalisierungsdaten enthalten kann, die möglichst nicht an einen Endteilnehmer weitergegeben werden sollten. Beispielsweise betreffen solche Signalisierungsdaten eine Rufnummer des rufenden Teilnehmers, die gemäß einem Leistungsmerkmal für das durchschaltevermittelte Netz dem Empfänger nicht angezeigt werden soll. Es gibt jedoch auch eine Vielzahl anderer Informationen, die einem Endteilnehmer nicht bekannt werden sollten, da dieser die Informationen für eine Störung der Signalisierung oder für die Umgehung einer Gebühr einsetzen kann.

Weiterhin geht die Erfindung von der Überlegung aus, dass es insbesondere bei einer sogenannten Inter-Domänen-Datenübertragung nicht möglich ist, an Hand der Zielrufnummer zu erkennen, dass das Endziel der Signalisierungsnachricht ein IP-Teilnehmer oder eine Netzübergangseinheit ist, über die ein Teilnehmer des durchschaltevermittelten Datenübertragungsnetzes erreicht werden kann.

Deshalb ist beim erfindungsgemäßen Verfahren zusätzlich zu den eingangs genannten Verfahrensschritten die Ursprungs-Signalisierungsnachricht in der Partner-Signalisierungsnachricht nicht enthalten, obwohl die Partner-Signalisierungsnachricht zu einer Übertragung der Ursprungs-Signalisierungsnachricht geeignet ist. Mit anderen Worten wird die Ursprungs-Signalisierungsnachricht zurückgehalten, um einem Missbrauch vorzubeugen. Die Ursprungs-Signalisierungsnachricht wird erst dann weitergegeben, wenn feststeht, dass kein Teilnehmeranschluss des Datenpaketübertragungsnetzes der direkte Empfänger ist.

Die Ursprungs-Signalisierungsnachricht entspricht einer Signalisierungsnachricht, wie sie auch bei einer Signalisierung für eine Datenübertragung eingesetzt wird, bei der die Nutzdaten ausschließlich in einem durchschaltevermittelten Datenübertragungsnetz übertragen werden. Die Partner-Signalisierungsnachricht hat bei einer Ausgestaltung bezüglich der Übertragung der Nutzdaten die gleiche Signalisierungsfunktion wie die Ursprungs-Signalisierungsnachricht. Beispielsweise sind Ursprungs-Signalisierungsnachricht und Partner-Signalisierungsnachricht Verbindungsaufbaunachrichten.

Bei einer Weiterbildung des erfindungsgemäßen Verfahrens ist die Ursprungs-Nachricht eine Nachricht gemäß ISUP-Standard und/oder gemäß einem auf dem ISUP-Standard aufbauenden Standard, wobei ISUP die Abkürzung für ISDN (Integrated Services Digital Network) User Part ist. Der ISUP-Standard ist in seinem Kern in den Standard Q.761 bis Q.765 von der ITU-T (International Telecommunication Union - Telecommunication Sector) festgelegt worden und über deren Internetseite http://www.itu.org der Öffentlichkeit zugänglich. Telefonnetze, die nach dem ISUP-Standard arbeiten, sind insbesondere in Europa weit verbreitet.

Alternativ oder kumulativ ist die Ursprungs-Signalisierungsnachricht eine Verbindungsaufbaunachricht. Gemäß ISUP-Standard wird die erste Verbindungsaufbaunachricht auch als IAM (Ihitial Address Message) bezeichnet. Die Signalisierungsdaten enthalten im Fall einer Verbindungsaufbaunachricht insbesondere ein Zielkennzeichen für das Ziel der Datenübertragung und ein Herkunftskennzeichen für den Sender der zu übertragenden Nutzdaten.

Bei einer anderen Weiterbildung des erfindungsgemäßen Verfahrens wird eine Antwortnachricht empfangen, welche als Antwort auf die Partner-Signalisierungsnachricht erzeugt worden ist. Abhängig von dem Inhalt oder von der Art der Antwortnachricht wird die Ursprungs-Signalisierungsnachricht über das Datenpaketübertragungsnetz übertragen oder die Übertragung der Ursprungs-Signalisierungsnachricht über das Datenpaketübertragungsnetz wird unterbunden, beispielsweise wird die zwischengespeicherte Ursprung-Signalisierungsnachricht verworfen bzw. gelöscht.

Bei einer nächsten Weiterbildung des erfindungsgemäßen Verfahrens ist die Partner-Signalisierungsnachricht und/oder die Antwortnachricht eine Nachricht gemäß SIP-Protokoll (Session Initiation Protocol), das von der IETF (Internet Engineering Task Force) im Standard RFC 2543 bzw. RFC 2543bis festgelegt worden ist. Bei einer Ausgestaltung ist die Partner-Signalisierungsnachricht eine Verbindungsaufbaunachricht. Gemäß SIP werden Verbindungsaufbaunachrichten als Invite-Nachrichten bezeichnet.

Bei einer anderen Weiterbildung des erfindungsgemäßen Verfahrens enthält die Partner-Signalisierungsnachricht ein Nachrichtenelement, das auf die Beteiligung eines durchschaltevermittelten Datenübertragungsnetzes hinweist. Zusätzlich enthält die Partner-Signalisierungsnachricht nur die Signalisierungsdaten der Ursprungs-Signalisierungsnachricht, die für eine Signalisierung zu einem Endgerät erforderlich sind, aber nicht alle Signalisierungsdaten der Ursprungs-Signalisierungsnachricht. Durch das Übermitteln des Nachrichtenelementes wird erreicht, dass der Empfänger im Fall eines Endgerätes des Datenpaketübertragungsnetzes das Nachrichtenelement ignorieren kann. Eine Netzübergangseinheit kann jedoch auf das Nachrichtenelement mit einer Zurückweisungsnachricht antworten, weil nur verschlüsselte Signalisierungsdaten übertragen werden sollen. Das Verwenden eines Nachrichtenelementes ist eine sehr einfache Möglichkeit, um zwischen einem Endgerät und einer Netzübergangseinheit zu unterscheiden.

Bei einer Weiterbildung des erfindungsgemäßen Verfahrens wird nach dem Empfang der Ursprungs-Signalisierungsnachricht und vor dem Senden der Partner-Signalisierungsnachricht geprüft, ob in der Ursprungs-Signalisierungsnachricht wesentliche zusätzliche Leistungsmerkmale des durchschaltevermittelten Datenübertragungsnetzes angefordert werden, die von dem Empfänger der Partner-Signalisierungsnachricht unbedingt unterstützt werden müssen oder ob solche zusätzlichen Leistungsmerkmale nicht angefordert werden. Werden wesentliche zusätzliche Leistungsmerkmale nicht unterstützt, ist auszulösen.

Zusätzliche Leistungsmerkmale sind Leistungsmerkmale, die über die Schritte hinausgehen, die zum Aufbau einer einfachen Kommunikation unbedingt erforderlich sind. Bei einer Sprachübertragung ist nur der Verbindungsaufbau, die Übertragung der Nutzdaten und der Verbindungsabbau unbedingt erforderlich. Beispiele für zusätzliche Leistungsmerkmale sind eine Rufumleitung, eine Rufweiterschaltung, eine Rufnummernunterdrückung oder eine geschlossene Benutzergruppe.

Wesentliche zusätzliche Leistungsmerkmale sind beispielsweise in der Nachricht selbst als solche bezeichnet, z.B. in einem sogenannten user-to-user-Element durch ein sogenanntes Fla. Alternativ lässt sich auch in der Leistungsbeschreibung eines zusätzlichen Leistungsmerkmals angeben, dass es sich um ein wesentliches zusätzliches Leistungsmerkmal handelt. Beispielsweise könnte das Leistungsmerkmal "geschlossene Benutzergruppe" als wesentliches zusätzliches Leistungsmerkmal eingestuft werden, das unbedingt unterstützt werden muss.

Abhängig vom Prüfergebnis enthält die Partnernachricht, wenn kein zusätzliches Leistungsmerkmal oder nur ein unwesentliches zusätzliches Leistungsmerkmal angefordert wird, einen Hinweis darauf, dass wesentliche zusätzliche Dienste des durchschaltevermittelten Datenübertragungsnetzes zwar vom Sender der Partner-Signalisierungsnachricht unterstützt werden, aber vom Empfänger der Partner-Signalisierungsnachricht nicht unterstützt werden müssen. Andernfalls enthält die Partner-Signalisierungsnachricht einen Hinweis darauf, dass die Unterstützung von wesentlichen zusätzlichen Leistungsmerkmalen des durchschaltevermittelten Datenübertragungsnetzes auch im Empfänger der Partner-Signalisierungsnachricht erforderlich ist. Beispielsweise lässt sich diese Unterscheidung bei Verwendung des SIP-Protokolls dadurch treffen, dass das Nachrichtenelement, das auf die Beteiligung des durchschaltevermittelten Datenübertragungsnetzes hinweist, entweder als ein unterstützter Parameter, d.h. als sogenannter supported Parameter, oder als erforderlicher Parameter, d.h. als sogenannter required Parameter, übertragen wird.

Bei einer nächsten Weiterbildung wird die Antwortnachricht in einer Einheit, die keine wesentlichen zusätzlichen Leistungsmerkmale des durchschaltevermittelten Datenübertragungsnetzes unterstützt, beispielsweise in einem Endgerät des Datenpaketübertragungsnetzes, abhängig von der Art des Hinweises erzeugt. Wenn die Unterstützung von wesentlichen zusätzlichen Leistungsmerkmalen des durchschaltevermittelten Datenübertragungsnetzes erforderlich ist, wird ausgelöst. Andernfalls wird standardgemäß eine Verbindung aufgebaut, wobei keine wesentlichen zusätzlichen Leistungsmerkmale genutzt werden.

In einer Einheit, die wesentliche zusätzliche Leistungsmerkmale des durchschaltevermittelten Datenübertragungsnetzes unterstützt, wird die Antwortnachricht dagegen unabhängig von der Art des Hinweises erzeugt, weil diese Einheit in der Lage ist, die zu den wesentlichen zusätzlichen Leistungsmerkmalen gehörenden Dienste zu erbringen.

Bei einer nächsten Weiterbildung wird in der Einheit, die wesentliche zusätzliche Leistungsmerkmale des durchschaltevermittelten Datenübertragungsnetzes unterstützt, abhängig von dem Nachrichtenelement als Antwortnachricht eine Zurückweisungsnachricht erzeugt, mit der die Partner-Signalisierungsnachricht zurückgewiesen und damit der Verbindungsaufbau abgebrochen wird. Bei einer Ausgestaltung enthält die Zurückweisungsnachricht ebenfalls ein Nachrichtenelement, das auf die Beteiligung eines durchschaltevermittelten Datenübertragungsnetzes hinweist. Bei einer nächsten Ausgestaltung enthält die Zurückweisungsnachricht einen Hinweis darauf, dass die Unterstützung von wesentlichen zusätzlichen Leistungsmerkmalen des durchschaltevermittelten Datenübertragungsnetzes unbedingt erforderlich ist.

Bei einer nächsten Weiterbildung des erfindungsgemäßen Verfahrens wird vom Empfänger der Partner-Signalisierungsnachricht an den Sender der Partner-Signalisierungsnachricht vorzugsweise in der Antwortnachricht oder in einer der Antwortnachricht folgenden Nachricht mindestens ein Sicherungsdatum übermittelt, das zum Durchführen eines Verschlüsselungsverfahrens dient. Nach dem Empfang der Antwortnachricht wird zu der Ursprungs-Signalisierungsnachricht eine weitere Partner-Signalisierungsnachricht erzeugt, die die Ursprungs-Signalisierungsnachricht in Übereinstimmung mit den Sicherungsdaten in einer elektronisch verschlüsselten Form enthält. Die Sicherungsdaten enthalten beispielsweise Angaben zu einer Versionsnummer des Verschlüsselungsverfahrens, einen Namen, mit dessen Hilfe sich ein öffentlicher digitaler Schlüssel ermitteln lässt, und/oder einen Wert für ein sogenanntes Challenge-Response-Verfahren, das sogenannte Replay-Attacken verhindern soll.

Bei einer Ausgestaltung wird die weitere Partner-Signalisierungsnachricht gesendet, bevor die Berechtigung des Empfängers der weiteren Partner-Signalisierungsnachricht zum Empfang der Ursprungs-Signalisierungsnachricht geprüft worden ist. Diese Ausgestaltung geht von der Überlegung aus, dass ein unbefugter Empfänger die verschlüsselten Signalisierungsdaten nicht entschlüsseln kann, da er beispielsweise den zur Entschlüsselung erforderlichen privaten Schlüssel nicht hat. Eine Prüfung der Berechtigung vor dem Absenden der weiteren Partner-Signalisierungsnachricht würde damit die Sicherheit nur geringfügig erhöhen. Andererseits wären mit einer solchen Vorausprüfung weitere zusätzliche Nachrichtenübertragungen verbunden.

Bei einer nächsten Weiterbildung des erfindungsgemäßen Verfahrens wird vom Sender der Partner-Signalisierungsnachricht an dem Empfänger der Partner-Signalisierungsnachricht vorzugsweise in der weiteren Partner-Signalisierungsnachricht ein Berechtigungsdatum gesendet. Das Berechtigungsdatum wird vorzugsweise erst nach dem Empfang der Ursprungs-Signalisierungsnachricht und vorzugsweise noch vor der Entschlüsselung beim Empfänger der weiteren Partner-Signalisierungsnachricht geprüft. Abhängig von der Prüfung wird die Ursprungs-Signalisierungsnachricht entschlüsselt und weiter für die Signalisierung genutzt oder die Ursprungs-Signalisierungsnachricht wird verworfen. Durch dieses Verfahren wird erreicht, dass sich die Ursprungs-Signalisierungsnachricht und das Berechtigungsdatum in einer Nachricht übertragen lassen.

Bei einer nächsten Weiterbildung des erfindungsgemäßen Verfahrens werden auch vom Sender der Partner-Signalisierungsnachricht an den Empfänger der Partner-Signalisierungsnachricht Sicherungsdaten gesendet, welche die Durchführung eines Verschlüsselungsverfahrens ermöglichen. Vom Empfänger der Partner-Signalisierungsnachricht wird an den Sender der Partner-Signalisierungsnachricht eine weiter für das durchschaltevermittelte Datenübertragungsnetz festgelegte Signalisierungsnachricht in gemäß den weiteren Sicherungsdaten verschlüsselter Form gesendet. Damit werden Signalisierungsnachrichten für das durchschaltevermittelte Datenübertragungsnetz in beiden Übertragungsrichtungen bei der Übertragung über das Datenpaketübertragungsnetz nur in verschlüsselter Form übertragen. Ein Missbrauch wird durch diese Maßnahme erheblich erschwert.

Bei einer Weiterbildung des erfindungsgemäßen Verfahrens wird vorzugsweise gemeinsam mit der weiteren Signalisierungsnachricht vom Empfänger der Partner-Signalisierungsnachricht an den Sender der Partner-Signalisierungsnachricht ein weiteres Berechtigungsdatum gesendet. Das weitere Berechtigungsdatum wird geprüft. Abhängig vom Prüfergebnis wird die weitere Signalisierungsnachricht für die Signalisierung genutzt oder verworfen.

Bei einer anderen Weiterbildung enthält das Berechtigungsdatum oder das weitere Berechtigungsdatum ein Kennwort und/oder eine elektronische Unterschrift, die mit Hilfe eines elektronischen Verschlüsselungsverfahrens geprüft wird. Das Einbeziehen des Berechtigungsdatums bzw. des weiteren Berechtigungsdatums erhöht den Schutz gegen Missbrauch weiter.

Die Erfindung betrifft außerdem zum Übermitteln von Signalisierungsdaten eine Vorrichtung, welche die Partner-Signalisierungsnachricht sendet. Bei Weiterbildungen enthält die Vorrichtung Einheiten, die mindestens einen auf den Sender der Partner-Signalisierungsnachricht bezogenen Verfahrensschritt gemäß dem erfindungsgemäßen Verfahren oder einer seiner Weiterbildungen ausführt.

Die Erfindung betrifft außerdem eine Vorrichtung zum Empfangen von Signalisierungsdaten, insbesondere zum Empfangen der Partner-Signalisierungsnachricht. Bei Weiterbildungen enthält die Vorrichtung mindestens eine Einheit, die einen auf den Empfänger der Partner-Signalisierungsnachricht bezogenen Verfahrensschritt des erfindungsgemäßen Verfahrens oder einer seiner Weiterbildungen ausführt.

Weiterhin betrifft die Erfindung Signalisierungsnachrichten, die beim erfindungsgemäßen Verfahren ausgetauscht werden, insbesondere eine Signalisierungsnachricht, die für ein Datenpaketübertragungsnetz festgelegt worden ist und die ein Nachrichtenelement enthält, das auf die Beteiligung eines durchschaltevermittelten Datenübertragungsnetzes hinweist.

Weiterhin betrifft die Erfindung ein Programm, mit dessen Hilfe die auf den Sender der Partner-Signalisierungsnachricht bezogenen Verfahrensschritte oder die auf den Empfänger der Partner-Signalisierungsnachricht bezogenen Verfahrensschritte nach dem erfindungsgemäßen Verfahren oder einer seiner Weiterbildungen ausgeführt werden.

Demzufolge gelten für die Vorrichtungen, für die Signalisierungsnachricht und für das Programm die oben genannten technischen Wirkungen ebenfalls.

Im Folgenden werden Ausführungsbeispiele der Erfindung an Hand der beiliegenden Zeichnungen erläutert. Darin zeigen:
- Figur 1: mit dem Internet verbundene durchschaltevermittelte Datenübertragungsnetze,
- Figur 2: Verfahrensschritte zum Aufbau einer Verbindung, bei der die Nutzdaten von einem durchschaltevermittelten Datenübertragungsnetz über das Internet wieder zu einem durchschaltevermittelten Datenübertragungsnetz übertragen werden,
- Figur 3: den Aufbau einer Steuereinheit für eine IngressNetzübergangseinheit, und
- Figur 4: den Aufbau einer Steuereinheit für eine EngressNetzübergangseinheit.

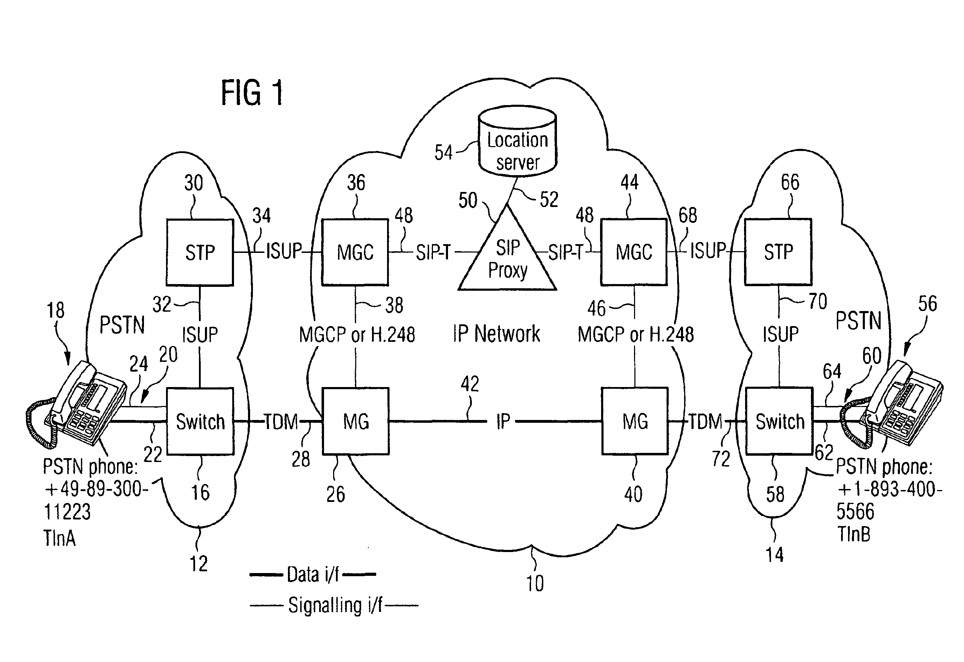

Figur 1 zeigt zwei mit dem Internet 10 verbundene durchschaltevermittelte Datenübertragungsnetze 12 und 14, die verschiedenen Netzbetreibern gehören. Bei einem anderen Ausführungsbeispiel sind die durchschaltevermittelten Datenübertragungsnetze 12 und 14 jedoch Teile des durchschaltevermittelten Datenübertragungsnetzes eines einzigen Betreibers, beispielsweise der Deutschen Telekom AG.

Im Internet 10 werden die Nutzdaten und die Signalisierungsdaten in Datenpaketen übertragen. Auf unteren Protokollebenen werden die Daten verbindungslos übertragen. In den durchschaltevermittelten Datenübertragungsnetzen 12 und 14 werden die Daten dagegen in Übertragungskanälen nach einem Zeitmultiplex-Verfahren übertragen. Die Übertragung ist auf allen Protokollebenen verbindungsorientiert.

Das durchschaltevermittelte Datenübertragungsnetz 12 enthält eine Vermittlungsstelle 16, an die ein Endgerät 18 eines Teilnehmers TlnA über eine Anschlussleitung 20 angeschlossen ist. Auf der Anschlussleitung 20 gibt es einen Nutzdatenübertragungskanal 22 und einen Signalisierungskanal 24, in welchem Signalisierungsdaten beispielsweise gemäß dem Teilnehmersignalisierungsprotokoll DSS1 (Digital Signalling System No. 1) übertragen werden. Das Endgerät 18 ist beispielsweise ein ISDN-Telefon (Integrated Services Digital Network) mit der Rufnummer 0049-89-30011223, d.h. dass sich das Endgerät 18 in Deutschland in der Stadt München befindet.

In der Vermittlungsstelle 16 gibt es ein nicht dargestelltes Koppelfeld und eine nicht dargestellte Steuereinheit. Beispielsweise ist die Vermittlungsstelle 16 vom Typ EWSD (elektronisches digitales Wählsystem) der Firma Siemens AG.

Die Gesprächsdaten werden von der Vermittlungsstelle 16 gegebenenfalls unter Einbeziehung weiterer Vermittlungsstellen bis zu einer sogenannten Ingress-Netzübergangseinheit 26 übertragen, d.h. einer Netzübergangseinheit auf der Seite des rufenden Teilnehmers TlnA. Zwischen der Vermittlungsstelle 16 und der Netzübergangseinheit 26 liegt eine Übertragungsstrecke 28, auf der die Nutzdaten in einem Zeitmultiplex-Verfahren in Zeitkanälen übertragen werden.

Zum Aufbau der Verbindung muss die Vermittlungsstelle 16 eine Signalisierung gemäß ISUP (ISDN User Part) durchführen. Dabei werden beispielsweise andere Vermittlungsstellen und eine Weiterleitungseinheit 30 einbezogen, die auch als STP (Signalling Transfer Point) bezeichnet wird. Zwischen der Vermittlungsstelle 16 und der Weiterleitungseinheit 30 gibt es eine Signalisierungsstrecke 32, in welcher die Signalisierungsdaten ebenfalls gemäß einem Zeitmultiplex-Verfahren übertragen werden.

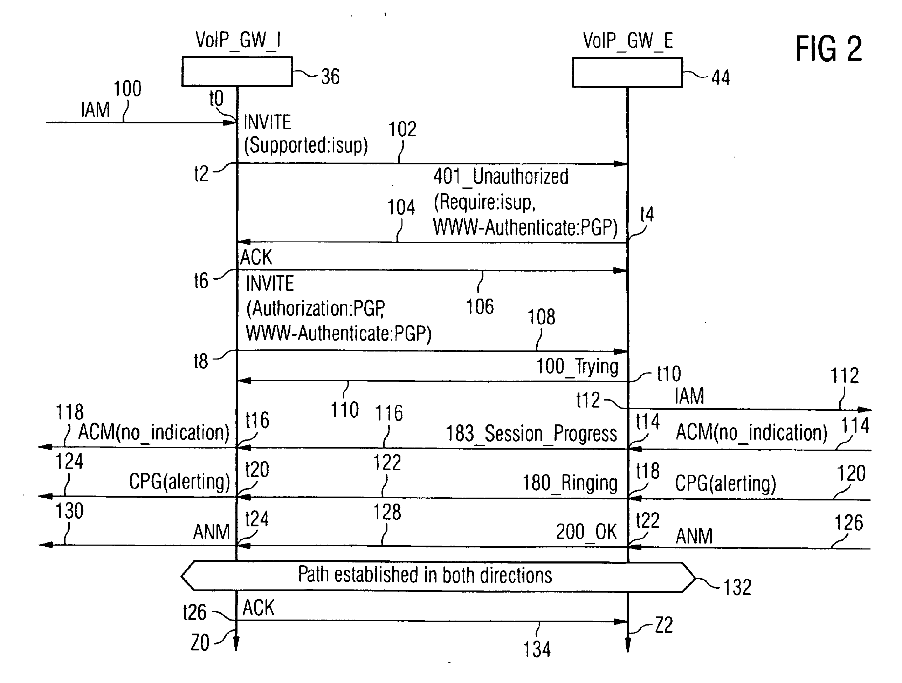

Die Weiterleitungseinheit 30 leitet die Signalisierungsdaten über eine Signalisierungsstrecke 34 an eine Steuereinheit 36 gemäß ISUP weiter. Die Steuereinheit 36 ist der Netzübergangseinheit 26 zugeordnet und bildet gemeinsam mit der Netzübergangseinheit 26 eine Netzübergangsfunktion. Die in der Steuereinheit 36 durchgeführten Verfahrensschritte werden unten an Hand der Figur 2 näher erläutert.

Zur Steuerung der Netzübergangseinheit 26 durch die Steuereinheit 36 wird beispielsweise das Protokoll MGCP (Media Gateway Control Protocol) oder das Protokoll gemäß H.248 eingesetzt. Das MGCP ist in dem RFC (Request for Comment) 2705 von der IETF (Internet Engineering Task Force) festgelegt worden. Das Protokoll H.248 ist von der ITU-T (International Telecommunication Union - Telecommunication Sector) festgelegt worden. Jedoch lassen sich auch andere Protokolle zur Steuerung einsetzen.

Im Internet 10 werden die vom Teilnehmer TlnA kommenden Nutzdaten gemäß Internetprotokoll (IP) zu einer sogenannten Engress-Netzübergangseinheit 40 auf der Seite eines gerufenen Teilnehmers TlnB übertragen. Die Datenübertragung wird auf der nächst höheren Protokollebene gemäß Protokoll TCP (Transmission Control Protocol) durchgeführt, siehe Übertragungsweg 42. Die Signalisierungsdaten, welche zum Aufbau der Verbindung für die Gesprächsdaten erzeugt worden sind, werden von der Steuereinheit 36 gemäß SIP-T (Session Initiation Protocol - Telephones) zu einer Steuereinheit 44 übertragen, welche zur Steuerung der Netzübergangseinheit 40 dient. Zwischen der Steuereinheit 44 und der Netzübergangseinheit 40 gibt es eine Steuerstrecke 46, auf der Steuerdaten gemäß Protokoll MGCP oder gemäß Protokoll H.248 übertragen werden. Die Übertragung der Signalisierungsdaten gemäß SIP-T ist durch einen Übertragungsweg 48 angedeutet, wobei die Signalisierungsdaten ebenfalls in Datenpaketen übertragen werden. Die Signalisierungsdaten werden gegebenenfalls unter Einbeziehung eines lokalen Diensterbringungsrechners 50 übertragen, der auch als Proxy bezeichnet wird, und der zur Ermittlung der einzubeziehenden Steuereinheit 44 dient. Beim Ermitteln der einzubeziehenden Steuereinheit baut der lokale Diensterbringungsrechner 50 eine Verbindung 52 zu einem Diensterbringungsrechner 54 auf, in dem Zuordnungen von Rufnummern zu Steuereinheiten gespeichert sind.

Der Teilnehmer TlnB benutzt ein Endgerät 56, das die Rufnummer 001-893-400-5566 hat, d.h. sich in den USA befindet. Das Endgerät 56 ist ein Telefon, das an eine Vermittlungsstelle 58 mit Hilfe einer Anschlussleitung 60 angeschlossen ist. Auf der Anschlussleitung 60 gibt es wiederum einen Nutzdatenübertragungskanal 62 und einen Signalisierungskanal 64. Die Vermittlungsstelle 58 signalisiert ebenfalls gemäß ISUP.

Die Steuereinheit 44 leitet die empfangenen Signalisierungsdaten gemäß ISUP-Protokoll an eine Weiterleitungseinheit 66 weiter, die Bestandteil des durchschaltevermittelten Datenübertragungsnetzes 14 ist. Dabei wird eine Signalisierungsstrecke 68 genutzt. Die Weiterleitungseinheit 66 leitet die Signalisierungsdaten ihrerseits über eine Signalisierungsstrecke 70 an die Vermittlungsstelle 58 weiter. Beispielsweise wird in den Signalisierungsdaten angegeben, welcher Übertragungskanal zwischen der Netzübergangseinheit 40 und der Vermittlungsstelle 58 auf einer Übertragungsstrecke 72 genutzt werden soll.

Figur 2 zeigt Verfahrensschritte zum Aufbau einer Verbindung, bei der die Nutzdaten von dem durchschaltevermittelten Datenübertragungsnetz 12 über das Internet 10 zu dem durchschaltevermittelten Datenübertragungsnetz 14 übertragen werden, siehe auch Figur 1. Vorgänge, die sich auf die Steuereinheit 36, d.h. auf die sogenannte Ingress-Steuereinheit beziehen, sind in Figur 2 mit Hilfe eines Zeitstrahls Z0 dargestellt. Vorgänge, die sich auf die Steuereinheit 44, d.h. auf die sogenannte Engress-Steuereinheit beziehen, sind in Figur 2 mit Hilfe eines Zeitstrahls Z2 dargestellt. Frühere Zeitpunkte liegen auf den Zeitstrahlen Z0 und Z2 weiter oben als spätere Zeitpunkte. Gleiche Zeitpunkte liegen auf gleicher Höhe.

Zu einem Zeitpunkt t0 trifft von der Weiterleitungseinheit 30 eine Verbindungsaufbaunachricht 100 in der Steuereinheit 36 ein. Die Verbindungsaufbaunachricht 100 wird auch als IAM (Initial Address Message) bezeichnet. Mit Hilfe der Verbindungsaufbaunachricht 100 wird signalisiert, dass der Teilnehmer TlnA eine Gesprächsverbindung zum Teilnehmer TlnB aufbauen möchte.

Zu einem Zeitpunkt t2, der nach dem Zeitpunkt t0 liegt, erzeugt die Steuereinheit 36 eine Verbindungsaufbaunachricht 102, die auch als Invite-Nachricht bezeichnet wird. Die Verbindungsaufbaunachricht 102 hat den folgenden Inhalt:
INVITE sip:+j-893-400-63251@sip01.siemens.de;user=phone SIP/2.0
Via: SIP/2.0/UDP mgc01.siemens.de:5060
From: <sip:+49-89-300-11223@mgc01.siemens.de;user=phone>
To: <sip:+1-893-400-5566@sip01.siemens.de;user=phone>
Call-ID: 1717@mgc01.siemens.de
CSeq: 1 INVITE
Contact: <sip:+49-89-300-11223@mgc01.siemens.de;user=phone>
Supported: isup
Session-Expires: 120
Content-Type: application/sdp
Content-Length: ...
v=0
o=GATEWAY_I 2890844527 2890844527 IN IP4 mg01.siemens.de
s=Session SDP
c=IN IP4 mg01.siemens.de
t=0 0
m=audio 3456 RTP/AVP 8
a=rtpmap:8 PCMA/8000

Das bedeutet, dass in der Verbindungsaufbaunachricht 102 die Verbindungsaufbaunachricht 100 nicht in gekapselter Form enthalten ist. Die Bedeutung der einzelnen Datenfelder der Verbindungsaufbaunachricht 102 ergibt sich aus dem RFC 2543 bzw. RFC 2543bis. Beispielsweise gilt:
- Im Datenfeld "From" ist die Telefonnummer des rufenden Teilnehmers TlnA und die Internetadresse der Steuereinheit 36 vermerkt. Außerdem ist vermerkt, dass das Endgerät ein Telefon ist. Die Zielrufnummer wird der Verbindungsaufbaunachricht 100 entnommen. Ist die Rufnummerunterdrückung jedoch aktiviert, so wird die Ursprungs-Rufnummer nicht in das Datenfeld "From" übernommen.
- In einem Datenfeld "To" ist die Zielrufnummer enthalten. Außerdem ist angegeben, dass das Endgerät ein Telefon ist. Die Zielrufnummer wurde ebenfalls aus der Verbindungsaufbaunachricht 100 entnommen.
- In einem Datenfeld "Supported" ist ein Parameter "isup" angegeben. Der Parameter "isup" gibt an, dass die Steuereinheit 36 das ISUP-Protokoll unterstützt, d.h. insbesondere zusätzliche Dienste bzw. Leistungsmerkmale des ISDN.

Im unteren Teil der Verbindungsaufbaunachricht 102 sind Angaben gemäß SDP (Session Description Protocol) enthalten, siehe RFC 2327.

Beim Empfang der Verbindungsaufbaunachricht 102 wird durch die Steuereinheit 44 auch der Parameter "isup" ausgewertet. Aufgrund dieses Parameters erzeugt die Steuereinheit 44 abweichend vom bisherigen Standard zu einem Zeitpunkt t4 eine Abbruchnachricht 104. Die Abbruchnachricht 104 entspricht im Wesentlichen der im SIP festgelegten Nachricht 401_Unauthorized. Die Abbruchnachricht 104 hat den folgenden Aufbau:
SIP/2.0 401 Unauthorized
Via: SIP/2.0/UDP mgc01.siemens.de:5060
From: <sip:+49-89-300-11223@mgc01.siemens.de;user=phone>
To: <sip:+1-893-400-5566@sip01.siemens.de;user=phone>
Call-ID: 1717@mgc01.siemens.de
CSeq: 1 INVITE
Content-Length: ...
Require: isup
WWW-Authenticate: pgp version="5.0"
realm="MCI WorldCom SIP-T Partner",
algorithm=md5,
nonce=<an appropriate value>

Abweichend vom SIP enthält die Abbruchnachricht 104 in dem im Standard vorgesehenen Datenfeld "Require" den Parameter "isup", um anzuzeigen, dass für die folgende Signalisierung eine Unterstützung des ISUP-Standards unbedingt erforderlich ist. Insbesondere werden also wesentliche zusätzliche Leistungsmerkmale des ISDN unterstützt.

In einem Datenfeld "WWW-Authenticate" sind Daten angegeben, die für eine verschlüsselte Übertragung von Signalisierungsnachrichten von der Steuereinheit 36 zur Steuereinheit 44 erforderlich sind. Das Datenfeld "WWW-Authenticate" enthält vier Datenfelder, deren Bedeutung im SIP festgelegt. So wird als Version des Verschlüsselungsverfahrens die Version 5.0 angegeben. Als Name der Einheit, die die verschlüsselten Daten empfangen soll, ist der Name der Steuereinheit 44 angegeben, nämlich "MCI WorldComSIP-T Partner". In einem Datenfeld "nonce" ist ein Wert für die Durchführung eines sogenannten Challenge-Response-Verfahrens angegeben.

Nach dem Empfang der Abbruchnachricht 104 bestätigt die Steuereinheit 36 zu einen Zeitpunkt t6 den Empfang dieser Nachricht und damit den Abbruch durch eine Bestätigungsnachricht 106, die auch als ACK-Nachricht (Acknowledgement) bezeichnet wird. Die Bestätigungsnachricht 106 wird an die Steuereinheit 44 gesendet.

Zu einem Zeitpunkt t8 erzeugt die Steuereinheit 36 erneut eine Verbindungsaufbaunachricht 108, die ebenfalls als Invite-Nachricht bezeichnet wird und die den folgenden Aufbau hat:
INVITE sip:+1-893-400-63251@ss2.wcom.com;user=phone SIP/2.0
Via: SIP/2.0/UDP mgc01.siemens.de:5060
From: <sip:+49-89-300-11223@mgc01.siemens.de;user=phone>
To: <sip:+1-893-400-5566@ss2.wcom.de;user=phone>
Call-ID: 1717@mgc01.siemens.de
CSeq: 1 INVITE
Contact: <sip:+49-89-300-11223@mgc01.siemens.de;user=phone>
Supported: isup
Encryption: pgp version="5.0"
Session-Expires: 120
Content-Length: ...
content-Type: message/sip
Authorization: pgp version="5.0",
realm="MCI WorldCom SIP-T Partner" ,
nonce=<an appropriate value>,
signature=<an appropriate value>
WWW-Authenticate: pgp version="5.0"
realm="Siemens SIP-T Partner",
algorithm=md5,
nonce =<an appropriate value>
content-Type: multipart/mixed; boundary=unique-boundary-1
MIME-Version: 1.0
--unique-boundary-1
Content-Type: application/SDP; charset=ISO-10646
v=0
o=GATEWAY_I 2890899527 2890844527 IN IP4 mg01.siemens.de
s=Session SDP
c=IN IP4 mg01.siemens.de
t=0 0
m=audio 3456 RTP/AVP 8
a=rtpmap:8 PCMA/8000
--unique-boundary-1
Content-Type: application/ISUP; version=nxv3; base=itu-t92+
Content-Disposition: signal; handling=optional
01 00 20 00 0a 03 02 0a 08 84 90 81 39 04 50
65 06 0a 09 84 13 94 98 03 10 21 32 03 31 02
00 a0 39 02 31 00 20 03 AB CD EF 00
--unique-boundary-1--

Die Datenfelder des Kopfes der Verbindungsaufbaunachricht 112, d.h. die Datenfelder "INVITE" bis "Session-Expires" stimmen im Wesentlichen mit den gleichnamigen Datenfeldern der Verbindungsaufbaunachricht 102 überein, so dass auf die oben gegebenen Erläuterungen verwiesen wird. Das Datenfeld "Content-Type" enthält jedoch die Angabe "Message/sip".

Zusätzlich enthält die Verbindungsaufbaunachricht 108 ein Datenfeld "Authorization", das Angaben zu dem Verschlüsselungsverfahren enthält und die in der Abbruchnachricht 104 enthaltenen Angaben wiederholt, wobei jedoch nicht das Datenfeld "Algorithm" angegeben ist. Mit Hilfe des im Datenfeld "realm" angegebenen Namens ermittelt die Steuereinheit 36 einen öffentlichen digitalen Schlüssel der Steuereinheit 44 und verwendet ihn für die nachfolgend erläuterte Verschlüsselung. Außerdem enthält das Datenfeld "Authorization" ein Datenfeld "Signature", in welchem ein Kennwort oder eine digitale Unterschrift der Steuereinheit 36 zu den verschlüsselt übertragenen Daten gespeichert ist. Zum Erzeugen der digitalen Unterschrift wird ein privater digitaler Schlüssel der Steuereinheit 36 verwendet. Die Richtigkeit der Unterschrift lässt sich in der Steuereinheit 44 unter Verwendung eines zugehörigen öffentlichen Schlüssels der Steuereinheit 36 überprüfen.

Der zwischen den gestrichelten Linien angeordnete Teil der Verbindungsaufbaunachricht 108 ist verschlüsselt und enthält unter anderem:
- ein Datenfeld "WWW-Authenticate", in welchem die im SIP vorgesehenen Angaben zur Spezifizierung eines Verschlüsselungsverfahrens enthalten sind, mit denen zur Steuereinheit 36 verschlüsselte Daten übertragen werden können. Insbesondere ist der Name "Siemens SIP-T Partner" der Steuereinheit 36 angegeben, mit dessen Hilfe sich ein benötigter öffentlicher digitaler Schlüssel der Steuereinheit 36 ermitteln lässt.
- In einem mittleren Teil des verschlüsselten Abschnitts sind die bereits in der Verbindungsaufbaunachricht 102 enthaltenen Angaben gemäß SDP enthalten.
- Im unteren Teil des verschlüsselten Teils wird eine Kopie der Verbindungsaufbaunachricht 100, d.h. der IAM, übermittelt. Der Inhalt der Verbindungsaufbaunachricht 100 ist in hexadezimaler Schreibweise angegeben und entspricht dem ISUP-Standard. Beispielsweise gibt die erste hexadezimale Zahl "01" an, dass es sich um eine IAM handelt.

Nach dem Empfang der Verbindungsaufbaunachricht 108 entschlüsselt die Steuereinheit 44 die verschlüsselten Signalisierungsdaten und überprüft die Unterschrift bzw. das Kennwort. Das Kennwort wurde beispielsweise vor der Durchführung des Verfahrens zwischen den Netzbetreibern der Datenübertragungsnetze 12 und 14 vereinbart. Lassen sich die Signalisierungsdaten entschlüsseln und ergibt die Berechtigungsprüfung, dass die Daten von einer berechtigten Vorrichtung, d.h. von der Steuereinheit 36 kommen, so erzeugt die Steuereinheit 44 zu einem Zeitpunkt t10 eine Fortsetzungsnachricht 110, die auch als 100_Trying bezeichnet wird, und mit deren Hilfe signalisiert wird, dass die Steuereinheit 44 einen Verbindungsaufbau zum Teilnehmer TlnB veranlasst. Die Fortsetzungsnachricht 110 wird von der Steuereinheit 44 über das Internet 10 zur Steuereinheit 36 übermittelt.

Zu einem Zeitpunkt t12 erzeugt die Steuereinheit 44 eine Verbindungsaufbaunachricht 112 gemäß ISUP-Protokoll, die auch als IAM (Initial Address Message) bezeichnet wird. Die Verbindungsaufbaunachricht 112 und die Verbindungsaufbaunachricht 100 stimmen überein. Die Verbindungsaufbaunachricht 112 wird an die Weiterleitungseinheit 66 gerichtet.

Zu einem Zeitpunkt t14 empfängt die Steuereinheit 44 von der Weiterleitungseinheit 66 eine ACM-Nachricht 114 gemäß ISUP. Die ACM-Nachricht 114 signalisiert, dass eine vollständige Zielrufnummer empfangen worden ist.

Die Steuereinheit 44 erzeugt aufgrund der ACM-Nachricht 114 eine Verbindungsfortsetzungsnachricht 116 gemäß SIP. Die Verbindungsfortsetzungsnachricht 116 wird auch als 183_Session_Progress bezeichnet und ist an die Steuereinheit 36 gerichtet. Da in der Steuereinheit 44 schon überprüft worden ist, dass die Steuereinheit 36 eine berechtigte Steuereinheit ist, können Signalisierungsnachrichten nun in unverschlüsselter Form zur Steuereinheit 36 übertragen werden. Die Verbindungsfortsetzungsnachricht 116 enthält deshalb die ACM-Nachricht 114 in unverschlüsselter Form. Außerdem enthält die Verbindungsfortsetzungsnachricht 116 ein Datenfeld, in dem eine digitale Unterschrift oder ein Kennwort der Steuereinheit 44 angegeben ist.

Die Verbindungsfortsetzungsnachricht 116 wird zu einem Zeitpunkt t16 in der Steuereinheit 36 empfangen. Die Berechtigung der Steuereinheit 44 wird in der Steuereinheit 36 überprüft. Ist die Steuereinheit 44 nicht berechtigt, so wird der Verbindungsaufbau abgebrochen. Andernfalls kann die übermittelte Signalisierungsnachricht als eine ACM-Nachricht 118 übernommen werden. Die ACM-Nachricht 118 wird zur Weiterleitungseinheit 30 gesendet.

Die folgenden Signalisierungsnachrichten zum Verbindungsaufbau entsprechen dem ISUP-Standard bzw. dem SIP-T. So wird zu einem Zeitpunkt t18 eine Fortsetzungsnachricht 120 empfangen, die auch als CPG-Nachricht (Call Progress) bezeichnet wird und die anzeigt, dass am Endgerät 56 ein Signalton erzeugt wird, mit dem der Teilnehmer TlnB gerufen wird, beispielsweise ein Klingelton. Auf den Empfang der Fortsetzungsnachricht 120 hin wird kurz nach dem Zeitpunkt t18 eine Signaltonnachricht 122 erzeugt, die auch als 180_Ringing bezeichnet wird. Die Signaltonnachricht 122 wird in der Steuereinheit 36 empfangen. Zu einem Zeitpunkt t20 wird aufgrund der Signaltonnachricht 122 eine Fortsetzungsnachricht 124 erzeugt, die auch als CPG-Nachricht (Call Progress) bezeichnet wird.

Zu einem Zeitpunkt t22 trifft in der Steuereinheit 44 eine ANM-Nachricht (Answer Message) ein, mit der signalisiert wird, dass der Teilnehmer TlnB den Hörer seines Endgerätes 56 abgehoben hat. Die Steuereinheit 44 erzeugt aufgrund der ANM-Nachricht 126 eine OK-Nachricht, die gemäß SIP auch als 200_0K bezeichnet wird und die an die Steuereinheit 36 gerichtet ist.

Die Steuereinheit 36 erzeugt nach dem Empfang der OK-Nachricht 128 gemäß ISUP-Standard eine ANM-Nachricht 130. Durch eine Umrahmung 132 ist angedeutet, dass nun zwischen dem Teilnehmer TlnA und dem Teilnehmer TlnB Gesprächsdaten während eines Gespräches ausgetauscht werden. Zu einem Zeitpunkt t26 ist das Gespräch beendet und die Steuereinheit 36 sendet eine Bestätigungsnachricht 34 an die Steuereinheit 44, um das Ende des Gespräches zu bestätigen.

Das an Hand der Figur 2 erläuterte Verfahren wird ausgeführt, wenn kein zusätzliches Leistungsmerkmal oder kein wesentliches zusätzliches Leistungsmerkmal angefordert werden. Wird dagegen ein wesentliches Leistungsmerkmal angefordert, z.B. eine geschlossene Benutzergruppe, so wird an Stelle der Verbindungsaufbaunachricht 102 eine Verbindungsaufbaunachricht gesendet, bei der der Parameter "isup" in einem Datenfeld "Require" und nicht in dem Datenfeld "Supported" enthalten ist. Die weiteren Verfahrensschritte bleiben jedoch gleich.

Unterschiede ergeben sich auch in dem Fall, in dem die Verbindungsaufbaunachricht 102 bzw. die ihr entsprechende Nachricht nicht auf eine Steuereinheit 44 sondern auf das Endgerät eines Teilnehmers des Internets 10 treffen.

Gemäß Standard RFC 2543 bzw. RFC 2543bis muss das Endgerät eines IP-Teilnehmers im Falle der Übermittlung des Parameters "isup" im Datenfeld "Require" den Verbindungsaufbau durch eine Nachricht 420 (Bad Extension) abbrechen. Ist der Parameter "isup" dagegen im Datenfeld "Supported" enthalten, so kann der Verbindungsaufbau wie zwischen zwei IP-Endgeräten fortgesetzt werden, wobei jedoch keine wesentlichen zusätzlichen Leistungsmerkmale gemäß ISUP-Standard unterstützt werden. Die rufende Steuereinheit 36 muss also gewährleisten, dass der Verbindungsaufbau abgebrochen wird, wenn weder die Abbruchnachricht 104, d.h. die Nachricht 401_Unauthorized, noch eine Nachricht 420 (Bad Extension) empfangen wird.

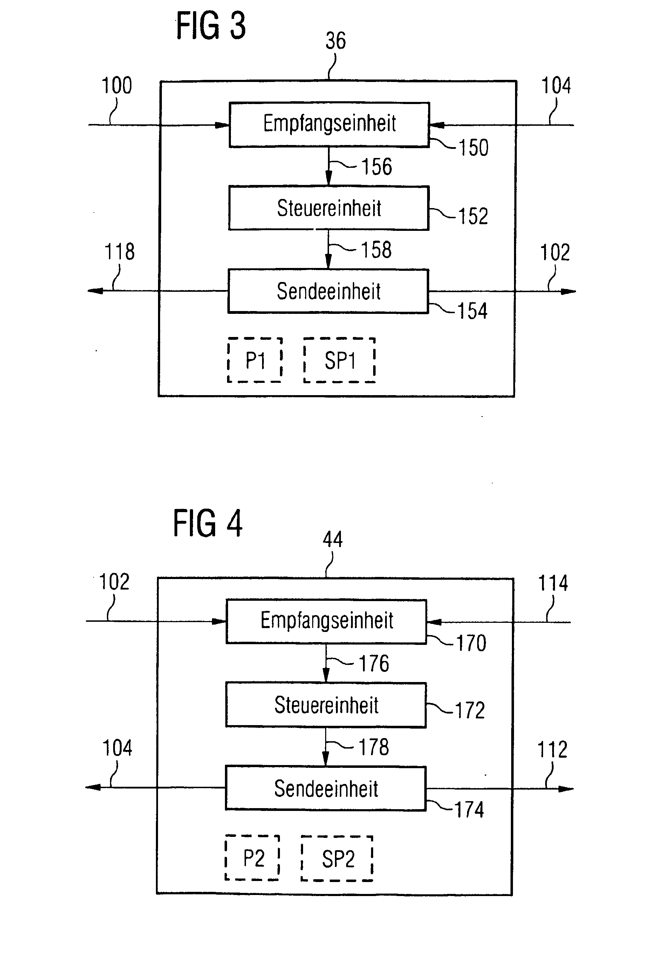

Figur 3 zeigt den Aufbau der Steuereinheit 36. Die Steuereinheit 36 enthält eine Empfangseinheit 150, eine Steuereinheit 152 und eine Sendeeinheit 154. Die Empfangseinheit 150 dient zum Empfang von Nachrichten, die von der Weiterleitungseinheit 30 oder aus dem Internet 10 kommen, beispielsweise zum Empfang der Verbindungsaufbaunachricht 100 oder zum Empfang der Abbruchnachricht 104. Die empfangenen Nachrichten werden von der Empfangseinheit 150 an die Steuereinheit 152 weitergegeben, siehe Pfeil 156.

Die Steuereinheit 156 erzeugt gemäß den an Hand der Figur 2 erläuterten Verfahrensschritten zu den empfangenen Nachrichten Folgenachrichten und steuert die Sendeeinheit 154 so an, dass diese Nachrichten gemäß den oben an Hand der Figur 2 erläuterten Verfahrensschritten versendet werden, siehe Pfeil 158.

Die Sendeeinheit 154 sendet Nachrichten an die Weiterleitungseinheit 30 oder in das Internet 10, beispielsweise die ACM-Nachricht 118 und die Verbindungsaufbaunachricht 102.

Figur 4 zeigt den Aufbau der Steuereinheit 44. Die Steuereinheit 44 enthält eine Empfangseinheit 170, eine Steuereinheit 172 und eine Sendeeinheit 174.

Die Empfangseinheit 170 dient zum Empfang von Nachrichten, die aus dem Internet 10 kommen oder die von der Weiterleitungseinheit 66 kommen, beispielsweise zum Empfang der Verbindungsaufbaunachricht 102 oder zum Empfang der ACM-Nachricht 114. Die Empfangseinheit 170 gibt die empfangenen Nachrichten an die Steuereinheit 172 weiter, siehe Pfeil 176.

Die Steuereinheit 172 führt die auf die Steuereinheit 44 bezogenen Verfahrensschritte, so wie oben an Hand der Figur 2 erläutert, aus und erzeugt aufgrund der empfangenen Nachrichten Folgenachrichten. Die Steuereinheit 172 steuert die Sendeeinheit 174 so an, dass die Folgenachrichten an den richtigen Empfänger gelangen, siehe Pfeil 178.

Die Sendeeinheit 174 sendet die für die Steuereinheit 36 bestimmten Nachrichten in das Internet bzw. die für die Weiterleitungseinheit 66 bestimmten Nachrichten, beispielsweise die Abbruchnachricht 104 oder die Verbindungsaufbaunachricht 112.

Die Funktionen der Empfangseinheit 150 bzw. 170, der Steuereinheit 152 bzw. 172 und der Sendeeinheit 154 bzw. 174 lassen sich mit Schaltungsanordnungen erbringen, die keine Programme ausführen. Bei einem anderen Ausführungsbeispiel werden jedoch zum Erbringen der Funktionen der Empfangseinheit 150 bzw. 170, der Steuereinheit 152 bzw. 172 und der Sendeeinheit 154 bzw. 174 ein Prozessor P1 bzw. P2 und eine Speichereinheit SP1 bzw. SP2 verwendet.

Bei anderen Ausführungsbeispielen wird als Verschlüsselungsverfahren nicht das Verfahren PGP (Pretty Good Privacy) sondern ein anderes Verschlüsselungsverfahren verwendet. Außerdem wird bei anderen Ausführungsbeispielen eine andere Auswahl von Datenfeldern getroffen, die verschlüsselt bzw. unverschlüsselt zu übertragen sind.

## Patentansprüche

1. Verfahren zum Übermitteln von Signalisierungsnachrichten, die gemäß dem ISUP-Standard und/oder einem auf dem ISUP-Standard aufbauenden Standard ausgebildet sind,
bei dem Nutzdaten zwischen einem durchschaltevermittelten Datenübertragungsnetz (12) und einem Datenpaketübertragungsnetz (10) übertragen werden,
bei dem eine für eine durchschaltevermittelte Datenübertragung festgelegte Ursprungs-Signalisierungsnachricht (100) von einer Weiterleitungseinheit (30) empfangen wird, welche Signalisierungsdaten für die Datenübertragung enthält,
**dadurch gekennzeichnet**
**dass** die Ursprungs-Signalisierungsnachricht bei einer erste Steuereinheit (36) zurückgehalten wird, indem zu der empfangenen Ursprungs-Signalisierungsnachricht (100) eine für eine Datenpaketübertragung festgelegte ISUP-basierte Signalisierungsnachricht (102) bei einer zweite Steuereinheit (44) gesendet wird, die zum Transport der Ursprungs-Signalisierungsnachricht (100) über das Datenpaketübertragungsnetz geeignet ist, diese jedoch nicht enthält.

2. Verfahren nach Anspruch 1, **dadurch gekennzeichnet , dass** die Ursprungs-Signalisierungsnachricht (100) eine Nachricht gemäß ISUP-Standard und/oder gemäß einem auf dem ISUP-Standard aufbauenden Standard ist,
und/oder dass die Ursprungs-Signalisierungsnachricht (100) eine Verbindungsaufbaunachricht (IAM) ist,
und/oder dass die Signalisierungsdaten ein Zielkennzeichen für die Datenübertragung und/oder ein Herkunftskennzeichen enthalten, das die Herkunft der zu übertragenden Nutzdaten angibt.

3. Verfahren nach einem der vorhergehenden Ansprüche,
**dadurch gekennzeichnet , dass** eine Antwortnachricht (104) auf die ISUP-basierte Signalisierungsnachricht hin übermittelt wird,
und dass abhängig von der Antwortnachricht (104) die Ursprung-Signalisierungsnachricht (100) übertragen oder deren Übertragung unterbunden wird.

4. Verfahren nach einem der vorhergehenden Ansprüche,
**dadurch gekennzeichnet , dass** die ISUP-basierte Signalisierungsnachricht (102) und/oder die Antwortnachricht (104) das SIP-Protokoll oder ein auf dem SIP-Protokoll aufbauendes Protokoll erfüllen,
und/oder dass die ISUP-basierte Signalisierungsnachricht (102) eine Verbindungsaufbaunachricht (INVITE) ist.

5. Verfahren nach einem der vorhergehenden Ansprüche,
**dadurch gekennzeichnet , dass** die ISUP-basierte Signalisierungsnachricht (102) ein Nachrichtenelement (isup) enthält, das auf die Beteiligung eines durchschaltevermittelten Datenübertragungsnetzes (10) hinweist,
und/oder dass die ISUP-basierte Signalisierungsnachricht (102) nur diejenigen Signalisierungsdaten aus der Ursprungs-Signalisierungsnachricht (100) enthält, die für eine Signalisierung zu einem Endgerät des Datenpaketübertragungsnetzes (10) unbedingt erforderlich sind und dass andere Signalisierungsdaten aus der Ursprungs-Signalisierungsnachricht nicht in der ISUP-basierte Signalisierungsnachricht (102) enthalten sind.

6. Verfahren nach Anspruch 5, **dadurch gekennzeichnet , dass** geprüft wird, ob in der Ursprungs-Signalisierungsnachricht (100) wesentliche zusätzliche Leistungsmerkmale des durchschaltevermittelten Datenübertragungsnetzes (12, 14) angefordert werden, die von der Gegenseite unbedingt unterstützt werden müssen oder ob solche wesentlichen Leistungsmerkmale nicht angefordert werden,
und dass abhängig vom Prüfergebnis die ISUP-basierte Signalisierungsnachricht (102) einen Hinweis darauf enthält, dass wesentliche zusätzliche Leistungsmerkmale des durchschaltevermittelten Netzes (10) zwar vom Sender (36) der ISUP-basierte Signalisierungsnachricht (102) unterstützt werden, aber vom Empfänger (44) der ISUP-basierte Signalisierungsnachricht (102) nicht unbedingt unterstützt werden müssen,
und/oder dass die ISUP-basierte Signalisierungsnachricht (102) abhängig vom Prüfergebnis einen Hinweis darauf enthält, dass die Unterstützung von wesentlichen zusätzlichen Leistungsmerkmalen des durchschaltevermittelten Datenübertragungsnetzes (10) auch im Empfänger (44) der ISUP-basierte Signalisierungsnachricht (102) erforderlich ist.

7. Verfahren nach Anspruch 6, **dadurch**
**gekennzeichnet , dass** die Antwortnachricht (104) in einer Einheit, die keine wesentlichen zusätzlichen Leistungsmerkmale des durchschaltevermittelten Datenübertragungsnetzes unterstützt, abhängig von der Art des Hinweises erzeugt wird,
und/oder dass die Antwortnachricht in einer Einheit (44), die wesentliche zusätzliche Leistungsmerkmale des durchschaltevermittelten Datenübertragungsnetzes (12) unterstützt, unabhängig von der Art des Hinweises erzeugt wird.

8. Verfahren nach einem der Ansprüche 5 bis 7, **dadurch gekennzeichnet , dass** in einer Einheit (44), die wesentliche zusätzliche Leistungsmerkmale des durchschaltevermittelten Datenübertragungsnetzes (12) unterstützt, abhängig vom Nachrichtenelement (isup) als Antwortnachricht (104) eine Zurückweisungsnachricht erzeugt wird, mit der die ISUP-basierte Signalisierungsnachricht (102) zurückgewiesen wird,
und/oder dass die Zurückweisungsnachricht (104) ebenfalls ein Nachrichtenelement (isup) enthält, das auf die Beteiligung eines durchschaltevermittelten Datenübertragungsnetzes (12, 14) hinweist,
und/oder dass die Zurückweisungsnachricht (104) einen Hinweis darauf enthält, dass wesentliche zusätzliche Leistungsmerkmale des durchschaltevermittelten Datenübertragungsnetzes (12, 14) unbedingt unterstützt werden müssen.

9. Verfahren nach einem der vorhergehenden Ansprüche,
**dadurch gekennzeichnet , dass** vom Empfänger (44) der ISUP-basierte Signalisierungsnachricht (102) an den Sender (36) der ISUP-basierte Signalisierungsnachricht (102) vorzugsweise in der Antwortnachricht (104) oder in einer der Antwortnachricht (104) folgenden Nachricht Sicherungsdaten gesendet werden,
und dass nach dem Empfang der Antwortnachricht (104) zu der Ursprungs-Signalisierungsnachricht (100) eine weitere ISUP-basierte Signalisierungsnachricht (108) erzeugt wird, die die Ursprungs-Signalisierungsnachricht (100) in gemäß den Sicherungsdaten elektronisch verschlüsselter Form enthält, und/oder wobei die weitere ISUP-basierte
Signalisierungsnachricht (108) vorzugsweise gesendet wird, bevor eine Berechtigung des Empfängers (44) der weiteren ISUP-basierte Signalisierungsnachricht (106) geprüft worden ist.

10. Verfahren nach Anspruch 9, **dadurch gekennzeichnet , dass** vom Sender (36) der ISUP-basierte Signalisierungsnachricht (102) an den Empfänger (44) der ISUP-basierte Signalisierungsnachricht (102) vorzugsweise in der weiteren ISUP-basierte Signalisierungsnachricht (108) ein Berechtigungsdatum gesendet wird,
dass das Berechtigungsdatum vorzugsweise nach dem Empfang der verschlüsselten Ursprungs-Signalisierungsnachricht geprüft wird,
und dass abhängig von der Prüfung des Berechtigungsdatum die Ursprungs-Signalisierungsnachricht (100) weiter für die Signalisierung genutzt oder verworfen wird.

11. Verfahren nach einem der vorhergehenden Ansprüche,
**dadurch gekennzeichnet , dass** vom Sender (36) der ISUP-basierte Signalisierungsnachricht (102) an den Empfänger (44) der ISUP-basierte Signalisierungsnachricht (102) Sicherungsdaten gesendet werden,
und dass vom Empfänger (44) der ISUP-basierte Signalisierungsnachricht (102) an den Sender (36) der ISUP-basierte Signalisierungsnachricht (102) mindestens eine weitere für eine durchschaltevermittelte Datenübertragung festgelegte Signalisierungsnachricht (114) in gemäß den weiteren Sicherungsdaten verschlüsselter Form gesendet wird.

12. Verfahren nach Anspruch 11, **dadurch**
**gekennzeichnet , dass** vorzugsweise gemeinsam mit den weiteren Sicherungsdaten vom Empfänger (44) der ISUP-basierte Signalisierungsnachricht (102) an den Sender (36) der ISUP-basierte Signalisierungsnachricht (102) ein weiteres Berechtigungsdatum gesendet wird,
dass das weitere Berechtigungsdatum geprüft wird,
und dass abhängig von dem Prüfergebnis die weitere Signalisierungsnachricht für die Signalisierung genutzt oder verworfen wird.

13. Verfahren nach Anspruch 10 oder 12, **dadurch**
**gekennzeichnet , dass** das Berechtigungsdatum ein Kennwort und/oder eine elektronische Unterschrift enthält.

14. Vorrichtung (36) zum Übermitteln von Signalisierungsnachrichten, die gemäß dem ISUP-Standard und/oder einem auf dem ISUP-Standard aufbauenden Standard ausgebildet sind, dass Nutzdaten zwischen einem durchschaltevermittelten Datenübertragungsnetz (12) und einem Datenpaketübertragungsnetz (10) übertragen werden,
mit einer Weiterleitungseinheit (30), die schickt eine durchschaltevermittelte Datenübertragung festgelegte Ursprungs-Signalisierungsnachricht (100), welche Signalisierungsdaten für die Datenübertragung enthält,
**dadurch gekennzeichnet**
mit einer erste Steuereinheit (36), die die Ursprungs-Signalisierungsnachricht zurückgehalten wird,
einer zweite Steuereinheit (44), indem zu der empfangenen Ursprungs-Signalisierungsnachricht (100) eine für eine Datenpaketübertragung festgelegte ISUP-basierte Signalisierungsnachricht (102) bei der zweite Steuereinheit (44) gesendet wird, die zum Transport der Ursprungs-Signalisierungsnachricht (100) über das Datenpaketübertragungsnetz geeignet ist, diese jedoch nicht enthält.

## Claims

1. Method for the transmission of signalling messages, formed in accordance with the ISUP standard and/or a standard based on the ISUP standard,
with user data being transmitted between an interconnected data transmission network (12) and a data packet transmission network (10),
with an original signalling message (100) being received by a forwarding unit (30), said original signalling message (100) being defined for an interconnected data transmission and containing signalling data for the data transmission, **characterised in that** the original signalling message is withheld at a first control unit (36), **in that** an ISUP-based signalling message (102) defined for a data packet transmission is sent at a second control unit (44) for the received original signalling message (100) and is suitable for the transportation of the original signalling message (100) via the data packet transmission network but does not contain it.

2. Method in accordance with claim 1, **characterised in that** the original signalling message (100) is a message in accordance with the ISUP standard and/or in accordance with a standard based on the ISUP standard,
and/or the original signalling message (100) is a connection setup message (IAM),
and/or the signalling data contains a destination signal for the data transmission and/or an origin signal that shows the origin of the user data to be transmitted.

3. Method in accordance with one of the preceding claims, **characterised in that** a response message (104) to the ISUP-based signalling message is transmitted onwards, and that depending on the response message (104) the original signalling message (100) is transmitted or its transmission is suppressed.

4. Method in accordance with one of the preceding claims, **characterised in that** the ISUP-based signalling message (102) and/or the response message (104) comply with the SIP protocol or a protocol based on the SIP protocol, and/or that the ISUP-based signalling message (102) is a connection setup message (INVITE).

5. Method in accordance with one of the preceding claims, **characterised in that** the ISUP-based signalling message (102) contains a message element (isup) that indicates the participation of an interconnected data transmission network (10),
and/or that the ISUP-based signalling message (102) contains only the signalling data from the original signalling message (100) that is absolutely necessary for signalling to a terminal of the data packet transmission network (10) and that other signalling data from the original signalling message is not contained in the ISUP-based signalling message (102).

6. Method in accordance with claim 5, **characterised in that** a check is made to determine whether essential additional performance features of the interconnected data transmission network (12, 14), that must absolutely be supported by the opposing side, are required in the original signalling message (100), or whether such essential performance features are not requested,
and that depending on the results of the check the ISUP-based signalling message (102) contains an indication that essential additional performance features of the interconnected network (10) are in fact supported by the transmitter (36) of the ISUP-based signalling message (102) but do not absolutely have to be supported by the receiver (44) of the ISUP-based signalling message (102),
and/or that the ISUP-based signalling message (102) contains, depending on the result of the check, an indication that support of essential additional performance features of the interconnected data transmission network (10) is also necessary in the receiver (44) of the ISUP-based signalling message (102).

7. Method in accordance with claim 6, **characterised in that** the response message (104) is generated in a unit that supports no essential additional performance features of the interconnected data transmission network, depending on the type of indication,
and/or that the response message is generated in a unit (44) that supports essential additional performance features of the interconnected data transmission network (12) regardless of the type of indication.

8. Method in accordance with one of claims 5 to 7, **characterised in that** in a unit (44) that supports essential additional performance features of the interconnected data transmission network (12), a rejection message is generated depending on the message element (isup) as a response message (104), with which the ISUP-based signalling message (102) is rejected,
and/or that the rejection message (104) also contains a message element (isup), that indicates the participation of an interconnected data transmission network (12, 14),
and/or that the rejection message (104) contains an indication that essential additional performance features of the interconnected data transmission network (12, 14) absolutely must be supported.

9. Method in accordance with one of the preceding claims, **characterised in that** security data is transmitted from the receiver (44) of the ISUP-based signalling message (102) to the transmitter (36) of the ISUP-based signalling message (102), preferably in the response message (104) or in a message following the response message (104),
and that after receipt of the response message (104) a further ISUP-based signalling message (108) for the original signalling message (100) is generated that contains the original signalling message (100) in an electronically encrypted form in accordance with the security data,
and/or whereby the further ISUP-based signalling message (108) is preferably transmitted before an authorisation of the receiver (44) of the further ISUP-based signalling message (106) has been checked.

10. Method in accordance with claim 9, **characterised in that** authorisation data is transmitted from the transmitter (36) of the ISUP-based signalling message (102) to the receiver (44) of the ISUP-based signalling message (102), preferably in the further ISUP-based signalling message (108),
that the authorisation data is preferably checked after receipt of the encrypted original signalling message,
and that depending on the check of the authorisation data the original signalling message (100) is further used for signalling or is discarded.

11. Method in accordance with one of the preceding claims, **characterised in that** security data is transmitted from the transmitter (36) of the ISUP-based signalling message (102) to the receiver (44) of the ISUP-based signalling message (102), and that from the receiver (44) of the ISUP-based signalling message (102) at least one further signalling message (114), defined for interconnected data transmission, is transmitted to the transmitter (36) of the ISUP-based signalling message (102) in an encrypted form in accordance with the further security data.

12. Method in accordance with claim 11, **characterised in that** further authorisation data is transmitted, preferably together with the further security data, from the receiver (44) of the ISUP-based signalling message (102) to the transmitter (36) of the ISUP-based signalling message (102),
that the further authorisation data is checked,
and that depending on the results of the check the further signalling message is used for signalling or is discarded.

13. Method in accordance with claim 10 or 12, **characterised in that** the authorisation data contains a password and/or an electronic signature.

14. Device (36) for the transmission of signalling messages, formed in accordance with the ISUP standard and/or with a standard based on the ISUP standard,
with user data being transmitted between an interconnected data transmission network (12) and a data packet transmission network (10),
with a forwarding unit (30) that transmits an original signalling message (100) defined for an interconnected data transmission and containing signalling data for the data transmission,
with a first control unit (36) with which the original signalling message is withheld,
with a second control unit (44) with which for the received original signalling message (100) an ISUP-based signalling message (102) defined for a data packet transmission is sent at the second control unit (44), which is suitable for the transportation of the original signalling message (100) via the data packet transmission network but does not contain it.

## Revendications

1. Procédé de transmission de messages de signalisation qui sont formés selon la norme ISUP et/ou selon une norme basée sur la norme ISUP,
dans lequel des données utiles sont transmises entre un réseau interconnecté de transmission de données (12) et un réseau de transmission de paquets de données (10),
dans lequel un message de signalisation d'origine (100) déterminé pour une transmission de données interconnectée est reçu par une unité d'acheminement (30), laquelle contient des données de signalisation pour la transmission de données,
**caractérisé en ce que** le message de signalisation d'origine est retenu auprès d'une première unité de commande (36), du fait qu'un message de signalisation (102) basé sur ISUP et déterminé pour une transmission de paquets de données est émis, en plus du message de signalisation d'origine (100) reçu, dans une deuxième unité de commande (44) qui est apte au transport du message de signalisation d'origine (100) par l'intermédiaire du réseau de transmission de paquets de données, mais qui cependant ne contient pas celui-ci.

2. Procédé selon la revendication 1, **caractérisé en ce que** le message de signalisation d'origine (100) est un message selon la norme ISUP et/ou selon une norme basée sur la norme ISUP, et/ou **en ce que** le message de signalisation d'origine (100) est un message d'établissement de communication (IAM), et/ou **en ce que** les données de signalisation contiennent un identificateur de destination pour la transmission des données et/ou un identificateur d'origine indiquant l'origine des données utiles à transmettre.

3. Procédé selon l'une quelconque des revendications précédentes, **caractérisé en ce qu'**un message de réponse (104) est transmis en réponse au message de signalisation basé sur ISUP, et **en ce qu'**en fonction du message de réponse (104), le message de signalisation d'origine (100) est transmis ou **en ce que** sa transmission est empêchée.

4. Procédé selon l'une quelconque des revendications précédentes, **caractérisé en ce que** le message de signalisation (102) basé sur ISUP et/ou le message de réponse (104) satisfont au protocole SIP ou à un protocole basé sur le protocole SIP, et/ou **en ce que** le message de signalisation (102) basé sur ISUP est un message d'établissement de communication (INVITE).

5. Procédé selon l'une quelconque des revendications précédentes, **caractérisé en ce que** le message de signalisation (102) basé sur ISUP contient un élément de message (isup) indiquant la participation d'un réseau interconnecté de transmission de données (10),
et/ou **en ce que** le message de signalisation (102) basé sur ISUP contient seulement les données de signalisation provenant du message de signalisation d'origine (100), qui sont absolument nécessaires pour une signalisation à un terminal du réseau de transmission de paquets de données (10) et **en ce que** d'autres données de signalisation provenant du message de signalisation d'origine ne sont pas contenues dans le message de signalisation (102) basé sur ISUP.

6. Procédé selon la revendication 5, **caractérisé en ce qu'**il est vérifié si, dans le message de signalisation d'origine (100), des services supplémentaires essentiels du réseau interconnecté de transmission de données (12, 14) sont demandés, qui doivent être absolument supportés par le côté opposé, ou si de tels services essentiels ne sont pas demandés,
et **en ce que**, en fonction du résultat de la vérification, le message de signalisation (102) basé sur ISUP contient un renseignement indiquant que des services supplémentaires essentiels du réseau interconnecté (10) sont certes supportés par l'émetteur (36) du message de signalisation (102) basé sur ISUP mais ne qu'ils ne doivent pas être absolument supportés par le récepteur (44) du message de signalisation (104) basé sur ISUP,
et/ou **en ce que** le message de signalisation (102) basé sur ISUP, en fonction du résultat de la vérification, contient un renseignement indiquant que le support de services supplémentaires essentiels du réseau interconnecté de transmission de données (10) est également nécessaire dans le récepteur (44) du message de signalisation (102) basé sur ISUP.

7. Procédé selon la revendication 6, **caractérisé en ce que** le message de réponse (104) est généré, en fonction du type du renseignement, dans une unité ne supportant aucun service supplémentaire essentiel du réseau interconnecté de transmission de données,
et/ou **en ce que** le message de réponse est généré, indépendamment du type du renseignement, dans une unité (44) supportant des services supplémentaires essentiels du réseau interconnecté de transmission de données (12).

8. Procédé selon l'une quelconque des revendications 5 à 7, **caractérisé en ce que**, dans une unité (44) supportant des services supplémentaires essentiels du réseau interconnecté de transmission de données (12), un message de rejet est généré en fonction de l'élément de message (isup), en tant que message de réponse (104), au moyen duquel message de rejet le message de signalisation (102) basé sur ISUP est rejeté,
et/ou **en ce que** le message de rejet (104) contient également un élément de message (isup) indiquant la participation d'un réseau interconnecté de transmission de données (12, 14),
et/ou **en ce que** le message de rejet (104) contient un renseignement indiquant que des services supplémentaires essentiels du réseau interconnecté de transmission de données (12, 14) doivent être absolument supportés.

9. Procédé selon l'une quelconque des revendications précédentes, **caractérisé en ce que** des données de sauvegarde sont émises par le récepteur (44) du message de signalisation (102) basé sur ISUP à l'émetteur (36) du message de signalisation (102) basé sur ISUP, de préférence dans le message de réponse (104) ou dans un message consécutif au message de réponse (104),
et **en ce qu'**après la réception du message de réponse (104), en plus du message de signalisation d'origine (100), un message supplémentaire de signalisation (108) basé sur ISUP, qui contient le message de signalisation d'origine (100) sous forme codée électroniquement selon les données de sauvegarde, est généré, et/ou le message supplémentaire de signalisation (108) basé sur ISUP étant de préférence émis avant qu'une autorisation du récepteur (44) du message supplémentaire de signalisation (106) basé sur ISUP ait été vérifiée.

10. Procédé selon la revendication 9, **caractérisé en ce qu'**une donnée d'autorisation est émise par l'émetteur (36) du message de signalisation (102) basé sur ISUP au récepteur (44) du message de signalisation (102) basé sur ISUP, de préférence dans le message supplémentaire de signalisation (108) basé sur ISUP,
**en ce que** la donnée d'autorisation est vérifiée de préférence après la réception du message codé de signalisation d'origine, et **en ce qu'**en fonction de la vérification de la donnée d'autorisation, le message de signalisation d'origine (100) continue d'être utilisé pour la signalisation ou est rejeté.

11. Procédé selon l'une quelconque des revendications précédentes, **caractérisé en ce que** des données de sauvegarde sont émises par l'émetteur (36) du message de signalisation (102) basé sur ISUP au récepteur (44) du message de signalisation (102) basé sur ISUP,
et **en ce qu'**au moins un message supplémentaire de signalisation (114), déterminé pour une transmission de données interconnectée, est émis par le récepteur (44) du message de signalisation (102) basé sur ISUP à l'émetteur (36) du message de signalisation (102) basé sur ISUP sous forme codée selon les données de sauvegarde supplémentaires.

12. Procédé selon la revendication 11, **caractérisé en ce qu'**une donnée d'autorisation supplémentaire est émise par le récepteur (44) du message de signalisation (102) basé sur ISUP à l'émetteur (36) du message de signalisation (102) basé sur ISUP, de préférence en commun avec les données de sauvegarde supplémentaires,
**en ce que** la donnée d'autorisation supplémentaire est vérifiée, et **en ce qu'**en fonction du résultat de la vérification, le message supplémentaire de signalisation est utilisé pour la signalisation ou est rejeté.

13. Procédé selon la revendication 10 ou 12, **caractérisé en ce que** la donnée d'autorisation est un mot de passe ou une signature électronique.

14. Dispositif (36) destiné à transmettre des messages de signalisation qui sont formés selon la norme ISUP et/ou selon une norme basée sur la norme ISUP, des données utiles étant transmises entre un réseau interconnecté de transmission de données (12) et un réseau de transmission de paquets de données (10),
comprenant une unité d'acheminement (30) qui envoie un message de signalisation d'origine déterminé pour une transmission de données, lequel message contient des données de signalisation pour la transmission de données,
**caractérisé par**
une première unité de commande (36) qui retient le message de signalisation d'origine,
une deuxième unité de commande (44) dans laquelle, en plus du message de signalisation d'origine (100) reçu, un message de signalisation (102) basé sur ISUP et déterminé pour une transmission de paquets de données est émis dans la deuxième unité de commande (44) qui est apte au transport du message de signalisation d'origine (100) par l'intermédiaire du réseau de transmission de paquets de données mais qui cependant ne contient pas celui-ci.
